# EUROPEAN PATENT APPLICATION

(11) **EP 4 425 248 A1**
(43) Date of publication of application: **04.09.2024**
(21) Application number: 22886899.8
(22) Date of filing: 21.10.2022
(51) Int. Cl.: G02F 1/13357, B32B 3/30, B32B 7/12, F21V 8/00, G02B 5/00

(54) **OPTICAL LAMINATE, OPTICAL DEVICE, AND METHOD FOR PRODUCING OPTICAL LAMINATE**

(30) Priority: 29.10.2021 JP 2021178158
(71) Applicant: Nitto Denko Corporation, Ibaraki-shi, Osaka 567-8680 (JP)
(72) Inventor: SUZUKI, Tatsuya, Ibaraki-shi, Osaka 567-8680 (JP); MIZOBATA, Kaori, Ibaraki-shi, Osaka 567-8680 (JP); SHINYA, Kaori, Ibaraki-shi, Osaka 567-8680 (JP); HONDA, Satoshi, Ibaraki-shi, Osaka 567-8680 (JP); TANAKA, Akiko, Ibaraki-shi, Osaka 567-8680 (JP); MIZUNO, Mizuho, Ibaraki-shi, Osaka 567-8680 (JP); ISHIGURO, Shigeki, Ibaraki-shi, Osaka 567-8680 (JP)
(74) Representative: Hoffmann Eitle
(86) International application number: PCT/JP2022/039303
(87) International publication number: WO 2023/074572

(57) **Abstract**

An optical laminate (**100**) comprises: a first optical sheet (**10**) that has a first main surface (**12s**) with a relief structure thereon and a second main surface (**18s**) on the reverse side from the first main surface; and a second optical sheet (**30**) that has a third main surface (**32s**) disposed on the first main surface side of the first optical sheet. The relief structure of the first main surface includes a plurality of recessed portions (**14**) and flat portions (**10s**) that are each between two recessed portions (**14**) adjacent to one another among the plurality of recessed portions. The third main surface and the flat portions of the first main surface are bonded by covalent bonding with a molecular adhesive (**20**) therebetween.

## Description

### TECHNICAL FILED

The present invention relates to an optical stack and an optical device having such an optical stack.

### BACKGROUND ART

Optical sheets (e.g., microlens sheets, prism sheets, brightness enhancement films (e.g., Brightness Enhancement Film: BEF (R) manufactured by 3M)) are used in various optical devices (e.g., display devices and illumination devices). In the present specification, "optical sheet" is not limited to those illustrated above, but broadly includes sheet-shaped optical components, and further includes, for example, diffusion plates and light guide plates. "Sheet-shaped" is meant to encompass a plate shape or a film shape, regardless of the stiffness (flexibility) and thickness of the sheet. An optical sheet is attached to another optical sheet or an optical device by using an adhesive layer, for example. In the present specification, "optical stack" refers to a configuration including an optical sheet and an adhesive layer or including a plurality of optical sheets. In the present specification, "adhesive" is meant to encompass tackiness agents (also referred to as "pressure-sensitive adhesives").

The applicant has disclosed an optical stack (referred to as "optical sheet" in Patent Document 1) that can be used for display devices and illumination devices in Patent Document 1. The optical stack in Patent Document 1 has an optical sheet (e.g., microlens sheet) with a concavo-convex structure on its surface and an adhesive layer provided on the surface with the concavo-convex structure. The adhesive layer fills 5% to 90% of the convex height of the concavo-convex structure. The adhesive layer is formed from an adhesive composition containing a graft polymer, which is a (meth)acrylic polymer graft-polymerized with chains containing monomers containing cyclic ether groups, and a cationic photopolymerization initiator or heat-curing catalyst.

Moreover, Patent Documents 2 and 3 disclose light distribution structures that may be used for display devices or illumination devices, in which total reflection at interfaces of multiple air cavities (internal space) is utilized. With the light distribution structures disclosed in Patent Documents 2 and 3, freedom and accuracy of light distribution control can be improved. The entire disclosure of Patent Documents 2 and 3 is incorporated herein by reference.

### CITATION LIST

### PATENT LITERATURE

Patent Document No. 1: Japanese Laid-Open Patent Publication No. 2012-007046
Patent Document No. 2: International Publication No. 2011/124765
Patent Document No. 3: International Publication No. 2019/087118

### SUMMARY OF INVENTION

### TECHNICAL PROBLEM

The inventors have considered forming the light distribution structures described in Patent Documents 2 and 3 by using a surface with a concavo-convex structure of an optical sheet with a concavo-convex structure on its surface and by disposing an adhesive layer on the surface with a concavo-convex structure. At this time, the shape and volume of the multiple air cavities that constitute the light distribution structures vary depending on the degree to which the adhesive layer penetrates into the dents of the concavo-convex structure, which consequently affects the characteristics of the light distribution structures. Therefore, it is desired to suppress the penetration of the adhesive layer into the dents of the concavo-convex structure.

Here, using the light distribution structures described in Patent Documents 2 and 3 as examples, a problem of optical stacks formed by stacking on a surface with a concavo-convex structure of an optical sheet another optical sheet using a conventional adhesive has been described, but this problem is not limited to the light distribution structures described in Patent Documents 2 and 3 and is common to optical stacks formed by stacking on a surface with a concavo-convex structure another optical sheet.

The present invention has been made in order to solve the aforementioned problem, and an objective thereof is to provide an optical stack in which an optical sheet and another optical sheet are stacked without substantially affecting the shape and volume of dents on a surface with a concavo-convex structure of the optical sheet, as well as an optical device having such an optical stack, and/or to provide a method for producing such an optical stack.

### SOLUTION TO PROBLEM

According to embodiments of the present invention, means for solution as recited in the following Items are provided.

### [Item 1]

An optical stack comprising:
a first optical sheet having a first main surface with a concavo-convex structure and a second main surface on an opposite side from the first main surface; and
a second optical sheet having a third main surface that is disposed on a side of the first main surface of the first optical sheet, wherein,
the concavo-convex structure of the first main surface includes a plurality of dents and flat portions between two dents that are adjacent to each other of the plurality of dents, and
the flat portions of the first main surface and the third main surface are bonded by covalent bonding via a molecular adhesive.

### [Item 2]

The optical stack of Item 1, wherein for each of the plurality of dents, when a distance from an opening face defined by an opening of the dent to a deepest portion of the dent is defined as A and a point at which a distance from the opening face to the third main surface of the second optical sheet that has penetrated into the dent takes a maximum value B is defined as a point of maximum penetration, B/A is 0.2 or less.

### [Item 3]

The optical stack of Item 2, wherein the point of maximum penetration is positioned on a side of the deepest portion compared to a side surface of the dent.

### [Item 4]

The optical stack of any of Items 1 to 3, wherein a distance between the flat portions and the third main surface does not exceed 500 nm.

### [Item 5]

An optical stack comprising:
a first optical sheet having a first main surface with a concavo-convex structure and a second main surface on an opposite side from the first main surface; and
a second optical sheet having a third main surface that is disposed on a side of the first main surface of the first optical sheet, wherein,
the concavo-convex structure of the first main surface includes a plurality of dents and flat portions between two dents that are adjacent to each other of the plurality of dents,
for each of the plurality of dents, when a distance from an opening face defined by an opening of the dent to a deepest portion of the dent is defined as A and a point at which a distance from the opening face to the third main surface of the second optical sheet that has penetrated into the dent takes a maximum value B is defined as a point of maximum penetration, B/A is 0.2 or less, and
a distance between the flat portions and the third main surface does not exceed 500 nm.

### [Item 6]

The optical stack of Item 5, wherein the flat portions of the first main surface and the third main surface are bonded by covalent bonding via a molecular adhesive.

### [Item 7]

The optical stack of any of Items 1 to 4 and 6, wherein the molecular adhesive has at least one reactive group selected from the group consisting of an azide group, an amino group, a mercapto group, an isocyanate group, a ureido group, an epoxy group, a silanol group, and an alkoxysilyl group.

### [Item 8]

The optical stack of any of Items 1 to 4 and 6, wherein the molecular adhesive has an azide group, and a silanol group or an alkoxysilyl group.

### [Item 9]

The optical stack of Item 8, wherein the molecular adhesive further has a triazine ring, and the azide group is bonded to the triazine ring.

### [Item 10]

The optical stack of Item 9, wherein the flat portions and the third main surface have at least one reactive group selected from the group consisting of a hydrocarbon group, a carbonyl group, and a hydroxyl group, and form covalent bonding with the molecular adhesive.

### [Item 11]

The optical stack of any of Items 1 to 10, wherein the first optical sheet is formed of a cured material of a curable resin.

### [Item 12]

The optical stack of any of Items 1 to 11, having a haze value of 5.0% or less.

### [Item 13]

An optical device comprising a light guide plate having the optical stack of any of Items 1 to 12.

### [Item 14]

A method for producing the optical stack of any of Items 1 to 12, the method comprising:
step A of applying a molecular adhesive represented by the following general formula [I] to at least one of the flat portions of the first optical sheet and the third main surface of the second optical sheet;
step B of irradiating the molecular adhesive with light after the step A; and
step C of pressurizing and heating the flat portions and the third main surface in a state where the flat portions and the third main surface face each other: 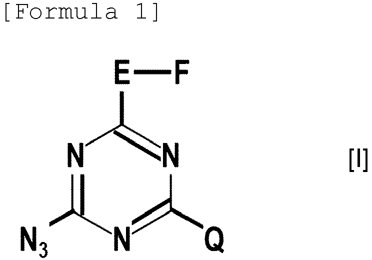
wherein E is any group; F is an OH group or an OH-generating group; -Q is -N₃ or -NR₁(R₂); R₁ and R₂ in -NR₁(R₂) are each H, a hydrocarbon group having 1 to 24 carbon atoms, or -RSi(R')n(OA)3-n, where R is a chain hydrocarbon group having 1 to 12 carbon atoms, R' is a chain hydrocarbon group having 1 to 4 carbon atoms, A is H or a chain hydrocarbon group having 1 to 4 carbon atoms, and n is an integer of 0 to 2; and R₁ and R₂ are the same as or different from each other.

### [Item 15]

The production method of Item 14, wherein in the step C, heating is performed to a temperature of 60°C or higher and 150°C or lower.

### [Item 16]

The production method of Item 14, wherein in the step C, heating is performed to a temperature of 80°C or higher and 110°C or lower.

### ADVANTAGEOUS EFFECTS OF INVENTION

According to embodiments of the present invention, there is provided an optical stack in which an optical sheet and another optical sheet are stacked without substantially affecting the shape and volume of dents on a surface with a concavo-convex structure of the optical sheet, as well as an optical device having such an optical stack. Also, according to embodiments of the present invention, there is provided a method for producing such an optical stack.

### BRIEF DESCRIPTION OF DRAWINGS

FIG. **1** is a schematic cross-sectional view of an optical stack **100** according to an embodiment of the present invention.
FIG. **2** is a schematic partial cross-sectional view of the optical stack **100.**
FIG. **3** is a schematic partial cross-sectional view of an optical stack **200** of a comparative example.
FIG. **4A** is a schematic plan view of a first optical sheet **10a** of an optical stack according to an embodiment of the present invention.
FIG. **4B** is a schematic cross-sectional view along line **4B-4B'** of the first optical sheet **10a** shown in FIG. **4A****.**

### DESCRIPTION OF EMBODIMENTS

An optical stack according to an embodiment of the present invention and an optical device having such an optical stack, as well as a method for producing the optical stack, will be described. Embodiments of the present invention are not limited to what is illustrated below.

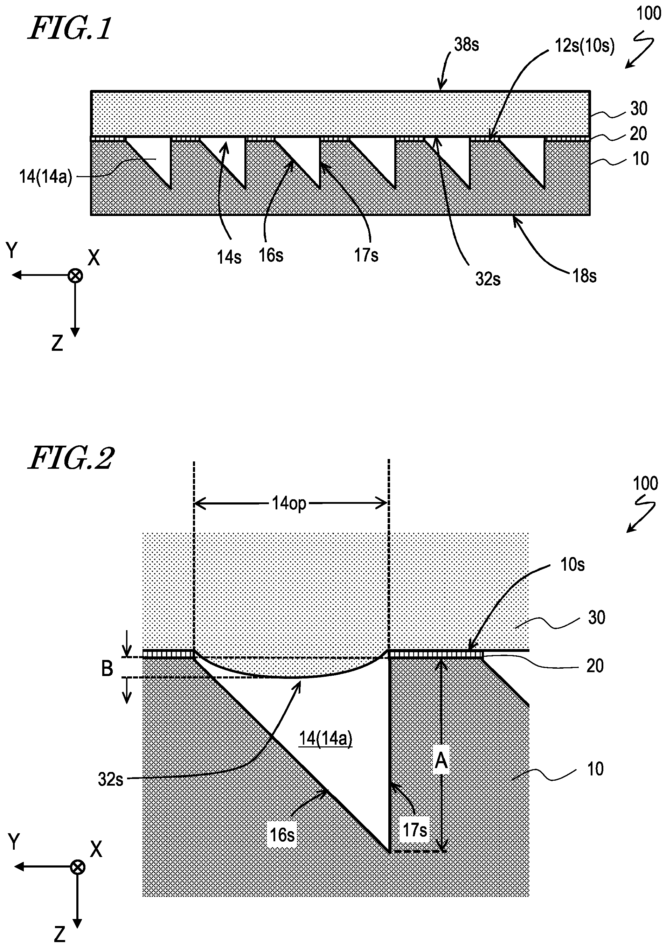

FIG. **1** shows a schematic cross-sectional view of an optical stack **100** according to an embodiment of the present invention. The optical stack **100** comprises: a first optical sheet **10** having a first main surface **12s** with a concavo-convex structure and a second main surface **18s** on the opposite side of the first main surface **12s;** and a second optical sheet **30** having a third main surface **32s** that is disposed on the side of the first main surface **12s** of the first optical sheet **10.** The second optical sheet **30** has a fourth main surface **38s** on the opposite side of the third main surface **32s.** The concavo-convex structure of the first main surface **12s** includes: a plurality of dents **14;** and flat portions **10s** between adjacent dents **14** of the plurality of dents **14.** The third main surface **32s** is flat, and the flat portions **10s** of the first main surface **12s** and the third main surface **32s** are bonded by covalent bonding via a molecular adhesive **20.**

By each of the plurality of dents **14** of the first main surface **12s** of the first optical sheet **10** and the third main surface **32s** of the second optical sheet, a plurality of internal spaces **14a** are defined. Typically, the internal spaces **14a** are void portions filled with air inside. However, instead of air, the internal spaces **14a** may be filled with a material having a lower refractive index than those of the first optical sheet **10** and the second optical sheet **30.** The interfaces formed by the internal spaces **14a** can cause total internal reflection (TIR) of light propagating in the optical stack **100.**

Here, the flat portions **10s** of the first main surface **12s** and the second main surface **18s** of the first optical sheet **10,** and the third main surface **32s** and the fourth main surface **38s** of the second optical sheet **30** are parallel to the XY plane. For example, light propagating in the -Y direction in the second optical sheet **30** undergoes total internal reflection by the plurality of internal spaces **14a** and is directed in the Z direction, which is perpendicular to the XY plane.

The first optical sheet **10** and the second optical sheet **30** are preferably formed of a light-transmitting resin. Here, resin is meant to broadly include elastomers and rubbers, in addition to thermoplastic resins and curable resins. Curable resins include, for example, thermosetting resins, photocurable resins, and electron beam-curable resins. Resins have, for example, a C-H bond or a Si-O bond. Examples of transparent thermoplastic resins include cellulose-based resins such as triacetyl cellulose (TAC), and polyester-based, polyvinyl alcohol-based, polycarbonate-based, polyamide-based, polyimide-based, polyethersulfone-based, polysulfone-based, polystyrene-based, polynorbornene-based, polyolefin-based, (meth)acrylic, acetate-based, and other transparent resins. Examples of thermosetting resins may include epoxy resins, phenolic resins, and polyester resins. Also, examples of photocurable resins include monomers (meant to include oligomers) having a vinyl group, an acrylate group (including a methacrylate group), an epoxy group, an isocyanate group, or an oxetane group. Specific examples of monomers include urethane acrylate-based, epoxy acrylate-based, ester acrylate-based, epoxy-based, and vinyl ether-based monomers.

The first optical sheet **10** and the second optical sheet **30** are selected in consideration of reactivity with the molecular adhesive **20.** In other words, the materials of the first optical sheet **10** and the second optical sheet **30** are selected so that at least the flat portions **10s** of the first main surface **12s** and the third main surface **32s** can form covalent bonding via the molecular adhesive **20.** As necessary, at least the flat portions **10s** of the first main surface **12s** and/or the third main surface **32s** may be subjected to surface modification (e.g., introduction of hydroxyl group by corona treatment) . The flatness of the flat portions **10s** of the first main surface **12s** and the third main surface **32s,** for example, preferably has a surface roughness Ra of 20 nm or less, more preferably 10 nm or less, and still more preferably 5 nm or less, as measured by an atomic force microscope. For example, the surface roughness Ra of the flat portions of the textured film used in Examples was about 3.9 nm, and the surface roughness Ra of the flat resin film was about 1.5 nm. Note that, although a resin film having a flat third main surface **32s** is exemplified as the second optical sheet **30,** it is sufficient that at least the portions of the third main surface **32s** that face the flat portions **10s** of the first main surface and form covalent bonding via the molecular adhesive **20** have the flatness described above.

The molecular adhesive **20** has a first reactive group RG1 that can form covalent bonding with the flat portions **10s** of the first main surface **12s** of the first optical sheet **10** and a second reactive group RG2 that can form covalent bonding with the third main surface **32s** of the second optical sheet **30.** The first reactive group RG1 and the second reactive group are different from each other. An individual molecule constituting the molecular adhesive **20** is sometimes referred to as an adhesive molecule **20.** Also, regardless of the state before or after forming covalent bonding with the first optical sheet **10** and the second optical sheet **30,** it is referred to as molecular adhesive **20** or adhesive molecule **20.** However, the molecular adhesive **20** may contain components other than the adhesive molecule (e.g., polymerization initiator).

As described above, when the adhesive molecule **20** has the first reactive group RG1 that can form covalent bonding with the flat portions **10s** of the first main surface **12s** of the first optical sheet **10** and the second reactive group RG2 that can form covalent bonding with the third main surface **32s** of the second optical sheet **30,** the flat portions **10s** of the first main surface **12s** of the first optical sheet **10** and the third main surface **32** of the second optical sheet **30** are bonded by one adhesive molecule **20,** the covalent bonding formed by the first reactive group RG1 of this adhesive molecule **20** and the flat portions **10s,** and the covalent bonding formed by the second reactive group RG2 of this adhesive molecule **20** and the third main surface **32s.**

In the case where the first reactive group RG1 or the second reactive group RG2 can react with itself to form covalent bonding (e.g., in the case where the second reactive groups RG2 can react with each other to form covalent bonding), a plurality of adhesive molecules **20** may intervene in the covalent bonding between the flat portions **10s** of the first main surface **12s** of the first optical sheet **10** and the third main surface **32s** of the second optical sheet **30.** For example, in the case where the adhesive molecule **20** has a plurality of silanol groups and/or alkoxysilyl groups, the adhesive molecule **20** may form covalent bonding by the reaction between the silanol groups and/or alkoxysilyl groups. At this time, for example, tens to hundreds of molecular layers of adhesive molecules **20** may intervene in the covalent bonding between the flat portions **10s** of the first main surface **12s** and the third main surface **32s** of the second optical sheet **30.** Of course, the minimum adhesive molecule **20** intervening in the covalent bonding between the flat portions **10s** of the first main surface **12s** and the third main surface **32s** of the second optical sheet **30** may be a monomolecular layer (thickness of about 1 nm).

That is, the distance between the flat portions **10s** of the first main surface **12s** of the first optical sheet **10** and the third main surface of the second optical sheet **30** is about 1 nm or more, preferably about 500 nm or less, and more preferably about 100 nm or less. The molecular adhesive **20** contains a large number of such covalent bonding-forming adhesive molecules **20,** but does not necessarily form a dense layer of adhesive molecules **20.** When there are few reaction points to form covalent bonding at the flat portions **10s** of the first main surface **12s** and at the third main surface **32,** the adhesive molecules **20** may be sparsely present.

Alternatively, the first reactive group RG1 of the adhesive molecule **20** may form covalent bonding with both the flat portions **10s** of the first main surface **12s** of the first optical sheet **10** and the third main surface **32s** of the second optical sheet **30.** At this time, an adhesive molecule (to be referred to as a first adhesive molecule) **20** that forms covalent bonding with the flat portions **10s** of the first main surface **12s of** the first optical sheet **10** by means of the first reactive group RG1 and an adhesive molecule (to be referred to as a second adhesive molecule) **20** that forms covalent bonding with the third main surface **32s** of the second optical sheet **30** by means of the first reactive group RG1 bond the flat portions **10s** of the first main surface **12s** of the first optical sheet **10** and the third main surface **32s** of the second optical sheet **30** by covalent bonding due to the formation of covalent bonding between the second reactive group RG2 of the first adhesive molecule and the second reactive group RG2 of the second adhesive molecule. At this time, there are two adhesive molecules **20** present between the flat portions **10s** of the first main surface **12s** of the first optical sheet **10** and the third main surface **32s** of the second optical sheet **30.** Also, as described above, in the case where the first reactive group RG1 or the second reactive group RG2 can react with itself to form covalent bonding, one or two or more third adhesive molecules, which are neither the first nor the second adhesive molecules, may intervene in the covalent bonding between the flat portions **10s** of the first main surface **12s** of the first optical sheet **10** and the third main surface **32s** of the second optical sheet **30.** Accordingly, the distance between the flat portions **10s** of the first main surface **12s** of the first optical sheet **10** and the third main surface **32s** of the second optical sheet **30** is about 2 nm or more, preferably about 500 nm or less, and more preferably 100 nm or less.

The adhesive molecule **20** has at least one reactive group selected from the group consisting of an azide group, an amino group, a mercapto group, an isocyanate group, a ureido group, an epoxy group, a silanol group, and an alkoxysilyl group, for example. The alkoxysilyl group generates a silanol group by a hydrolysis reaction. The molecular adhesive **20** has, for example, an azide group as the first reactive group RG1 (or second reactive group RG2) and a silanol group or an alkoxysilyl group as the second reactive group RG2 (or first reactive group RG1). The adhesive molecule **20,** for example, further has a triazine ring, and the azide group is bonded to the triazine ring. When the first reactive group RG1 is an azide group or an amino group and the second reactive group RG2 is a silanol group or an alkoxysilyl group, covalent bonding may be formed with the first reactive group to the surfaces of the first and second optical sheets and covalent bonding may be formed between the second reactive groups.

For example, the compounds (molecular adhesives, adhesive molecules) described in Japanese Patent No. 5083926, Japanese Patent No. 6452919, or Japanese Patent No. 6674594 can be suitably used. The entire disclosure of Japanese Patent No. 5083926, Japanese Patent No. 6452919, or Japanese Patent No. 6674594 is incorporated herein by reference.

The adhesive molecule **20** described in Japanese Patent No. 5083926 is represented, for example, by the following general formula [I]: 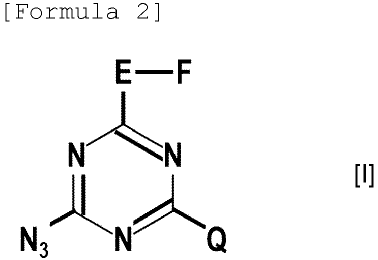 wherein E is any group; F is an OH group or an OH-generating group; -Q is -N₃ or -NR₁(R₂); R₁ and R₂ in -NR₁(R₂) are each H, a hydrocarbon group having 1 to 24 carbon atoms, or -RSi(R')n(OA)3-n, where R is a chain hydrocarbon group having 1 to 12 carbon atoms, R' is a chain hydrocarbon group having 1 to 4 carbon atoms, A is H or a chain hydrocarbon group having 1 to 4 carbon atoms, and n is an integer of 0 to 2; and R₁ and R₂ are the same as or different from each other.

Among the adhesive molecule **20** having a triazine ring represented by the above general formula [I], an adhesive molecule **20** having an azide group and a silanol group or an alkoxysilyl group is preferable. The azide group of this adhesive molecule **20** is bonded to the triazine ring.

The adhesive molecule has an alkoxysilyl group and an azide group. It further has a triazine ring. The azide group is preferably bonded directly to the triazine ring (C atom). The number of azide groups bonded to the triazine ring is, for example, one or two. The OH group or the OH-generating group (e.g., alkoxysilyl group) is preferably bonded indirectly to the triazine ring (C atom) via a spacer (e.g., amino group, oxy group, and/or hydrocarbon group). There are one or two or more alkoxysilyl groups indirectly bonded.

The azide group bonded to a triazine ring (electron-localized conjugated skeleton) has high decomposition energy to nitrene. Accordingly, effects due to near-ultraviolet ray and visible light are unlikely to occur. This improves the workability of ultraviolet exposure. Nitrene bonded to a triazine ring is stable compared to nitrene that is not. Bonding between nitrenes is suppressed. Hydrogen withdrawing activity for C-H bonds and addition activity for unsaturated bonds are enhanced. That is, an effective reaction is possible with a small amount of exposure.

The alkoxysilyl group is bonded to the triazine ring (electron-localized conjugated skeleton) via a spacer (e.g., amino group, oxy group, and/or hydrocarbon group). For this reason, in the case where the adhesive molecule is bonded to a surface of a resin, when in contact with the other surface of the resin, the entropy effect for generating a chemical bond is enhanced. The improvement of the entropy effect increases the frequency factor term in the interfacial reaction after the contact between the surfaces of the resins (the surface of the first optical sheet and the surface of the second optical sheet). As a result of this, the opportunity for the interfacial reaction is increased. The length of the spacer is reflected in the increase of the frequency factor in the interfacial reaction. When the length of the spacer is too long, the cost becomes high. In addition, a decrease in the amount of adhesive molecule adsorbed occurs. Accordingly, a spacer with a moderate length is preferable. From such a viewpoint, adhesive molecules represented by the following general formulas [Io], [Ia], and [Ib] are preferable.

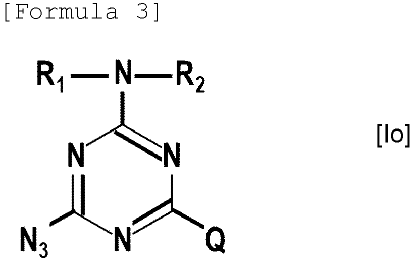

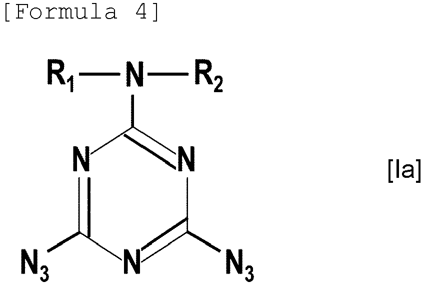

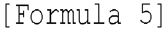

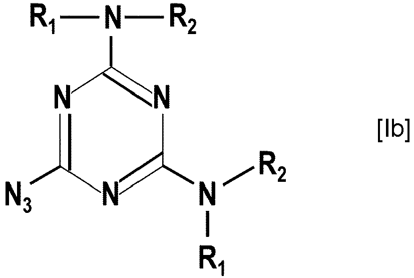

From the viewpoint of an increase in the frequency factor term in the interfacial reaction, the number of alkoxysilyl groups and azide groups present in one molecule is preferably large. However, from the viewpoint of cost and other factors, there are also restrictions on the number of such groups. That is, the adhesive molecules represented by the general formulas [Io], [Ia], and [Ib] are preferable.

The alkoxysilyl group in the general formulas [Io], [Ia], and [Ib] is in most cases an OH-generating group (OH precursor). In order to modify the OH-generating group to OH group, a treatment with water (neutral water, acidic water, alkaline water) is performed, for example. Besides, a corona discharge treatment and a plasma treatment are also considered. However, a water treatment is preferable.

An adhesion treatment (surface treatment: modification treatment) of an optical sheet (first optical sheet and/or second optical sheet) can be performed, for example, as follows.

At first, a treatment liquid (solution or dispersion) containing the adhesive molecule is prepared. Solvents used are water, alcohols (e.g., methanol, ethanol, isopropanol, ethylene glycol, propylene glycol, cellosolve, carbitol), ketones (e.g., acetone, methyl ethyl ketone, cyclohexanone), aromatic hydrocarbons (e.g., benzene, toluene, xylene), aliphatic hydrocarbons (e.g., hexane, octane, decane, dodecane, octadecane), esters (e.g., ethyl acetate, methyl propionate, methyl phthalate), ethers (e.g., tetrahydrofuran, ethyl butyl ether, anisole), and the like. Mixtures of different types of adhesive molecules may be used. The content of the adhesive molecule is 0.0001 to 10 mass%. It is particularly preferably 0.001 to 2 mass%. This is because it is not effective when the content of the adhesive molecule is too small. On the other hand, the amount of reaction with the optical sheets is limited, and thus too much is of little significance. From such a viewpoint, the above proportion is preferable.

In the treatment liquid, a surfactant is added as necessary from the viewpoint of adjustment of surface tension. For example, nonionic surfactants (e.g., nonionic surfactants composed of long alkyl chains and polyethylene glycol), cationic surfactants (e.g., quaternary ammonium salts), or anionic surfactants (e.g., organic carboxylates, sulfonates) are used.

An optical sheet is immersed in the treatment liquid. Alternatively, the treatment liquid is sprayed onto an optical sheet. By doing so, the adhesive molecule (molecular adhesive) is attached to the surface of the optical sheet.

After this, the optical sheet is irradiated with light (ultraviolet ray). In particular, only the locations where the adhesive molecule is desired to be bonded to the optical sheet are irradiated with light. In order to do this, a mask with an appropriate pattern is used. The irradiation with ultraviolet ray decomposes the azide group in the adhesive molecule. The decomposition of azide group generates nitrene. This nitrene attacks functional groups (e.g., -CH₃, -CH₂-, - CH<, -CH=CH-) on the surface of the optical sheet. Then, a hydrogen withdrawing radical addition or radical addition reaction occurs, resulting in a chemical bond between the adhesive molecule and the surface of the optical sheet. The chemical bond does not occur in unirradiated locations.

For the irradiation with ultraviolet ray, UV irradiation devices (e.g., high-pressure mercury UV lamps, low-pressure mercury UV lamps, fluorescent UV lamps (short ARC xenon lamps, chemical lamps), metal halide lamps) are used. Then, the optical sheet is irradiated with ultraviolet ray of 200 to 450 nm. When the amount of irradiation light is too little, it is difficult for the reaction to proceed. On the other hand, when the amount of irradiation light is too much, the optical sheet may be deteriorated. Accordingly, the preferred amount of irradiation light (light source wavelength: 254 nm) is 1 mJ/cm² to 5 J/cm². More preferably, it is 5 mJ/cm² to 1 J/cm².

In the case where the optical sheet has a complicated shape, the use of a reflector is effective in order to irradiate the optical sheet uniformly with UV light. Examples of reflectors include mirrors, surface-polished metal foils, Al mirror foils, SUS mirror foils, and silver-plated mirror plates. The shape, dimensions, materials and the like of the reflector are selected as appropriate from the viewpoint of reflection efficiency.

The optical stack **100** can be produced by the following production method, for example. The production method according to an embodiment of the present invention includes: step A of applying, for example, the adhesive molecule **20** represented by the above general formula [I] to at least one of the flat portions **10s** of the first optical sheet **10** and the third main surface **32s** of the second optical sheet **30;** step B of irradiating the adhesive molecule **20** with light after the step A; and step C of pressurizing and heating the flat portions **10s** and the third main surface **32s** in a state where the flat portions **10s** and the third main surface **32s** face each other. In the step C, heating is performed to a temperature of, for example, 60°C or higher and 150°C or lower, more preferably 80°C or higher and 110°C or lower. The pressurization pressure is, for example, 0.01 MPa or more and 50 MPa or less, preferably 0.1 MPa or more and 5 MPa or less. The pressurization time is, for example, 0.1 minutes or longer and 200 minutes or shorter. The heating temperature and/or the heating time are set in consideration of the heat resistance of the first optical sheet **10** and the second optical sheet **30.**

As the adhesive molecule, the adhesive molecule (molecular adhesive M) described in Japanese Patent No. 6674594 can also be used.

The adhesive molecule (molecular adhesive M) is an adhesive molecule having at least one reactive group (Zα) selected from the group consisting of an amino group (-NH₂), an azide group, a mercapto group, an isocyanate group, a ureido group, and an epoxy group, and at least one reactive group (Zβ) selected from the group consisting of a silanol group and a group that generates a silanol group by a hydrolysis reaction. Note that the reactive group (Zα) is preferably an amino group (-NH₂) or an azide group. Since an adhesive molecule containing an azide group is the same as the adhesive molecule described in Japanese Patent No. 5083926, the following describes an embodiment that mainly uses an adhesive molecule having an amino group.

The reactive group (Zα) in the adhesive molecule can form a chemical bond with a reactive substructure (Zγ) of a thermoplastic resin (P₁) in the optical sheet (first or second optical sheet). This chemical bond is thought to chemically fix the adhesive molecule to the surface of the optical sheet. The chemical bond is preferably covalent bonding. The thermoplastic resin (P₁) is, for example, at least one selected from the group consisting of olefin-based resins, cycloolefin-based resins, acrylic resins, olefin-vinyl acetate-based resins, olefin-based ionomer resins, and polyester resins.

The reactive group (Zβ) in the adhesive molecule forms a chemical bond with the surface of the other optical sheet (second or first optical sheet). The surface of the other optical sheet preferably has a hydroxyl group (hydroxy group) or a carboxy group (-COOH). By performing a surface treatment on the other optical sheet formed of a thermoplastic resin or a thermosetting resin, a hydroxyl group or a carboxyl group can be introduced. Examples of surface treatments include corona treatments, plasma treatments, ultraviolet ray irradiation treatments, electron beam irradiation treatments, ozone treatments, excimer ultraviolet ray treatments, acid treatments, and base treatments.

Examples of groups that generate a silanol group by a hydrolysis reaction include groups having a substructure represented by Si-X¹. Examples of X¹ include alkoxy groups having 1 to 10 carbon atoms such as a methoxy group, an ethoxy group, a n-propoxy group, and an isopropoxy group; halogen atoms such as a fluorine atom, a chlorine atom, and a bromine atom; and other hydrolyzable groups.

The thickness of the molecular adhesive applied to the optical sheets is preferably 200 nm or less, more preferably 150 nm or less, still more preferably 100 nm or less, and particularly preferably 50 nm or less. Also, the thickness of the molecular adhesive is preferably 0.5 nm or more, and more preferably 1 nm or more.

Meanwhile, the flat portions **10s** of the first main surface **12s** and the third main surface **32s** have, for example, a hydrocarbon group (C-H group), a carbonyl group (-(C(=O)-group), a carboxyl group, and/or a hydroxyl group (OH group), forming covalent bonding with the adhesive molecule **20.** For example, the azide group of the adhesive molecule **20** forms covalent bonding with the hydrocarbon group of the flat portions **10s** of the first main surface **12s** or the third main surface **32s** after ultraviolet ray irradiation, the amino group forms covalent bonding with the carbonyl carbon, and the alkoxysilyl group forms covalent bonding with the hydroxyl group. The amino group forms covalent bonding with the hydroxyl group or carboxyl group.

For example, the molecular adhesive can be applied to the optical sheets as follows. For example, a molecular adhesive solution containing the molecular adhesive (M) is prepared, this solution is applied onto an optical sheet, and then a drying treatment for the resulting coating film or a treatment to fix the molecular adhesive to the optical sheet is performed.

The solvent used when preparing the molecular adhesive solution is not particularly limited. Examples of solvents include alcohol-based solvents such as methanol, ethanol, isopropanol, ethylene glycol, and diethylene glycol; ketone-based solvents such as acetone and methyl ethyl ketone; ester-based solvents such as ethyl acetate and butyl acetate; halogen-containing compound-based solvents such as methylene chloride; aliphatic hydrocarbon-based solvents such as butane and hexane; ether-based solvents such as tetrahydrofuran and butyl ether; aromatic compound-based solvents such as benzene and toluene; amide-based solvents such as N,N-dimethylformamide and N-methylpyrrolidone; and water. One of these may be used alone, or two or more thereof may be used in combination.

The concentration of the molecular adhesive (adhesive molecule) in the molecular adhesive solution is not particularly limited. That concentration is preferably 0.005 to 1.000 mol/L, and more preferably 0.050 to 0.500 mol/L. By setting the concentration of the adhesive molecule to 0.005 mol/L or more, the molecular adhesive can be efficiently applied onto the optical sheets. Also, by setting the concentration to 1.000 mol/L or less, unintended reactions in the molecular adhesive solution can be suppressed, resulting in excellent stability of the solution.

The application method of the molecular adhesive solution is not particularly limited, and known application methods can be used. Examples of application methods include a spin coating, a spray coating, a bar coating, a knife coating, a roll knife coating, a roll coating, a blade coating, a dip coating, a curtain coating, a die coating, and a gravure coating, but a bar coating and a gravure coating are preferable.

After applying the molecular adhesive solution, usually, a drying treatment is performed to dry the resulting coating film, either by natural drying or by putting into a drying mechanism. Among these, it is preferable to perform the drying treatment by putting into a drying mechanism from the viewpoint of improvement in productivity. Examples of drying mechanisms include batch-type drying mechanisms such as air ovens, and continuous drying mechanisms such as heat rolls and hot air through mechanisms (facilities in which the object to be dried is heated and dried while moving and passing through an open-type drying furnace and being exposed to a blast, etc.). Note that devices that can also be used as a part of these drying mechanisms, such as high frequency heating, heat medium circulation heaters such as oil heaters, and heaters such as far infrared heaters, can also be used as drying mechanisms themselves. Among these, hot air through mechanisms are preferable from the viewpoint of improvement in productivity. The drying temperature adjusted by the drying mechanism is usually 20 to 250°C, preferably 25 to 200°C, more preferably 30 to 150°C, and particularly preferably 35 to 120°C. The drying time is usually 1 second to 120 minutes, preferably 10 seconds to 10 minutes, more preferably 20 seconds to 5 minutes, and particularly preferably 30 seconds to 3 minutes.

Next, a treatment to fix the molecular adhesive to the optical sheet (hereinafter, sometimes referred to as fixation treatment) is performed. The fixation treatment can be selected as appropriate depending on the characteristics of the reactive group (Zα) of the molecular adhesive. Usually, application of the molecular adhesive onto the optical sheet generates a chemical bond and generation of the chemical bond is accelerated by heating, and therefore, it is preferable to perform a heating treatment from the viewpoint of improvement in productivity. The heating temperature is usually 40 to 250°C, preferably 60 to 200°C, and more preferably 80 to 120°C. The heating time is usually 1 second to 120 minutes, preferably 1 to 60 minutes, and more preferably 1 to 30 minutes. The heating method is not particularly limited, and the same mechanisms and devices as the drying mechanisms described above can be used.

The application of the molecular adhesive solution, the drying treatment, and the fixation treatment may be repeated multiple times.

In FIG. **1****,** for simplicity, the molecular adhesive **20** is shown only between the flat portions **10s** of the first main surface **12s** and the third main surface **32s,** but it is not limited to this. For example, in the case where the first optical sheet **10** is immersed in a treatment liquid (solution or dispersion) containing the molecular adhesive **20,** the molecular adhesive **20** can be attached to and remain over the entire first main surface **12s,** i.e., not only on the flat portions **10s** but also on first slopes **16s** and second slopes **17s** that constitute the dents **14.** Also, in the case where the second optical sheet **30** is immersed in a treatment liquid containing the molecular adhesive **20,** the molecular adhesive **20** can be attached to and remain over the entire third main surface **32s.**

Note that even when the molecular adhesive **20** remains, it is at most a monomolecular layer of the adhesive molecule **20,** which is smaller than the wavelength of visible light (400 nm or more and less than 760 nm) and has little effects on the optical characteristics. Also, the thickness (depth of the dents) of the first optical sheet **10** is several micrometers or more, and therefore, although the molecular adhesive **20** is shown in FIG. **1****,** the physical length (thickness) of the molecular adhesive **20** is negligibly small. Note that the treatment liquid containing the molecular adhesive **20** can be applied selectively only to the flat portions **10s** by printing or other methods.

The molecular adhesive **20** present between the first optical sheet **10** and the second optical sheet **30** is at most a bimolecular layer thick, which is thinner than the wavelength of visible light and can thus be considered not optically present. Accordingly, when the refractive indices of the first optical sheet **10** and the second optical sheet **30** are matched, the first optical sheet **10** and the second optical sheet **30** can be bonded in a state where there is no interface in optical terms. The difference (absolute value) in refractive index between the first optical sheet **10** and the second optical sheet **30** is, for example, preferably 0.20 or less, more preferably 0.15 or less, and still more preferably 0.10 or less.

Next, referring to FIG. **2****,** the shape of the internal spaces **14a** of the optical stack **100** will be described.

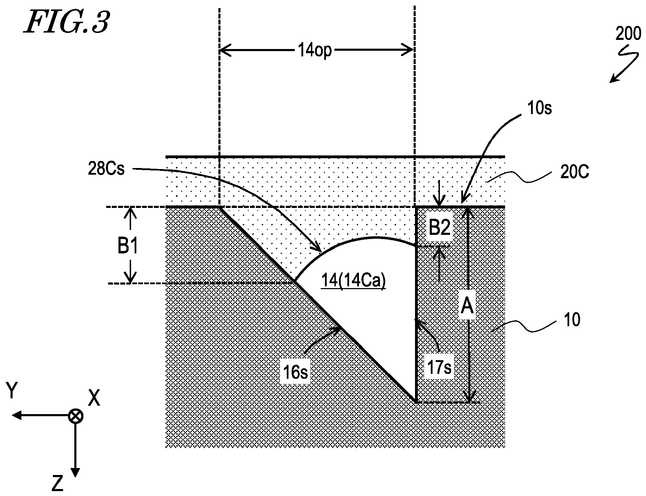

The optical stack **100** has the plurality of internal spaces **14a.** The plurality of internal spaces **14a** are defined by each of the plurality of dents **14** of the first main surface **12s** of the first optical sheet **10** and the third main surface **32s** of the second optical sheet. The molecular adhesive **20** is shown in FIG. **2** as well, but the physical length (thickness) of the molecular adhesive **20** is negligibly small. Accordingly, in the optical stack **100,** the adhesive does not penetrate into the dents **14,** as in an optical stack **200** that uses a conventional adhesive layer (adhesive layer **20C** in FIG. **3**).

However, the second optical sheet **30** may be deformed by the heating and pressurizing when the second optical sheet **30** adheres to the first optical sheet **10,** causing the second optical sheet **30** to penetrate into the dents **14,** as shown in FIG. **2****.** At this time, under the adhesion conditions, penetration of the second optical sheet **30** into the dents **14** can be suppressed if a second optical sheet **30** with sufficiently high stiffness is selected. Here, when the distance from an opening face defined by an opening **14op** of the dent **14** (broken line in the opening **14op** of the dent **14** in FIG. **2**) to the deepest portion of the dent **14** is defined as A and the point at which the distance from the opening face to the third main surface **32** of the second optical sheet **30** that has penetrated into the dent **14** takes the maximum value B is defined as the point of maximum penetration, B/A can be 0.2 or less as illustrated in Examples later. B/A is preferably 0.15 or less, more preferably 0.10 or less, and still more preferably 0.05 or less.

Also, since penetration of the second optical sheet **30** into the dent **14** is due to flexure of the second optical sheet **30,** the third main surface **32s** is convex toward the bottom of the dent **14,** as shown in the figure. Accordingly, when the point at which the distance from the opening face to the third main surface **32** of the second optical sheet **30** that has penetrated into the dent **14** takes the maximum value B is defined as the point of maximum penetration, the point of maximum penetration is positioned on the side of the deepest portion compared to a first slope **16s** and a second slope **17s** of the dent **14.** In other words, even when the second optical sheet **30** penetrates into the dent **14,** the second optical sheet **30** rarely comes into contact with the first slope **16s** and/or the second slope **17s** of the dent **14,** and the area of the first slope **16s** and/or the second slope **17s** that form the interfaces that cause total internal reflection of the internal space **14a** does not decrease.

As described above, according to embodiments of the present invention, the degree to which the second optical sheet **30** penetrates into the dents **14** can be sufficiently suppressed so that the shape of the internal spaces **14a** can be substantially equal to the shape of the dents **14,** and therefore, the optical characteristics (e.g., light distribution characteristics) can be obtained as designed.

For the type of the molecular adhesive and the adhesion conditions, it is preferable to select a second optical sheet **30** with stiffness that does not allow penetration into the dents **14.** Also, even when the second optical sheet **30** does not penetrate into the dents **14,** the dents **14** may be deformed if the heat resistance of the first optical sheet **10** is not sufficient. When the dents **14** are deformed, the desired optical characteristics cannot be obtained. Accordingly, for the type of the molecular adhesive and the adhesion conditions, it is preferable to select a first optical sheet **10** with stiffness (heat resistance) that does not deform the dents **14.** In particular, the first optical sheet **10** is preferably formed of a cured material of a curable resin. Cured materials of curable resins have a cross-linked structure and are not thermally deformed easily. Accordingly, when heating and pressurizing are performed when the second optical sheet **30** adheres via the molecular adhesive, the dents **14** of the first optical sheet **10** can be prevented from being deformed. Note that a preliminary experiment may be conducted to predict the deformation upon adhesion and to form the dents **14.**

FIG. **3** shows a schematic cross-sectional view of an optical stack **200** produced using an adhesive layer **20C.** Note that, in FIG. **3****,** the second optical sheet **30** on the adhesive layer **20C** is omitted. The thickness of the adhesive layer **20C** is generally 1 µm or more, typically 4 µm or more, and is 10 or more times larger than the thickness of the molecular adhesive **20.**

As shown in FIG. **3****,** when using the adhesive layer **20C,** a surface **28Cs** of the adhesive layer **20C** on the side of the first optical sheet **10** penetrates into the dent **14.** For example, if a common thermosetting adhesive is used, the adhesive is heated and pressurized during pasting, at which time the adhesive is softened, which allows the adhesive to penetrate into the dent **14.** Also, in the case where a tackiness agent (pressure-sensitive adhesive) is used as well, the tackiness agent has low stiffness, and therefore, the tackiness agent penetrates into the dent **14** under the pressure during pasting.

The lower surface **28Cs** of the adhesive layer **20C** that has penetrated into the dent **14** is concave toward the bottom of the dent **14.** This is due to the cohesion (surface tension) of the softened adhesive (or tackiness agent), in contrast to the third main surface **32s** of the second optical sheet **30** shown in FIG. **2****,** which is convex toward the bottom of the dent **14.** Accordingly, when the adhesive layer **20C** is used for pasting, if the distance from the opening face defined by the opening **14op** of the dent **14** to the deepest portion of the dent **14** is defined as **A** and the point at which the distance from the opening face to the lower surface **28Cs** of the adhesive layer **20C** that has penetrated into the dent **14** takes the maximum value **B** is defined as the point of maximum penetration, the point of maximum penetration is the point of contact with the first slope **16s** or the second slope **17s** of the dent **14,** and the maximum value **B** of the distance to the lower surface **28Cs** is either a distance **B1** to the first slope **16s** or a distance **B2** to the second slope **17s** in FIG. **3****.**

When using the adhesive layer **20C** as described above, the distance to the lower surface **28Cs** taking the maximum value **B** is the distance **B1** to the first slope **16s** or the distance **B2** to the second slope **17s,** and therefore, unlike the optical stack **100** of the embodiment described with reference to FIG. **2****,** the area of the first slope **16s** and/or the second slope **17s** that form the interfaces that cause the total internal reflection of the internal space **14Ca** decreases.

In addition, although the degree of penetration into the dents **14** depends on the type of the adhesive and the conditions (temperature, pressure, time) during pasting, it is difficult to keep the degree of penetration low. The concave shape of the lower surface **28Cs** of the adhesive layer **20C** depends on the shape of the dent **14** and the way the pressure is applied (direction of stress acting on the adhesive) during pasting, but is generally asymmetric, and for example, as shown in FIG. **3****,** more penetration occurs at the smaller inclination angle (the angle to the flat portions **10s** of the first main surface **12s** of the first optical sheet **10**). Accordingly, when the point at which the distance from the opening face to the lower surface **28Cs** of the adhesive layer **20C** that has penetrated into the dent **14** takes the maximum value **B** is defined as the point of maximum penetration, the point of maximum penetration is the point of contact with the first slope **16s** of the dent **14** and the maximum value **B** is **B1** in FIG. **3****.** Of course, **B2** may be larger than **B1** and **B2** may be the maximum value **B,** or **B1** may be equal to **B2.** In any case, it is difficult to keep **B/A** at 0.1 or less. FIG. **3** shows an example with **B/A** = about 0.4 (see Comparative Example 1 described later).

Accordingly, as shown in FIG. **3****,** the size and shape of the internal space **14Ca** defined by the dent **14** and the adhesive layer **20C** deviate significantly from the dent **14,** and therefore, the optical characteristics (e.g., light distribution characteristics) deviate significantly from the design.

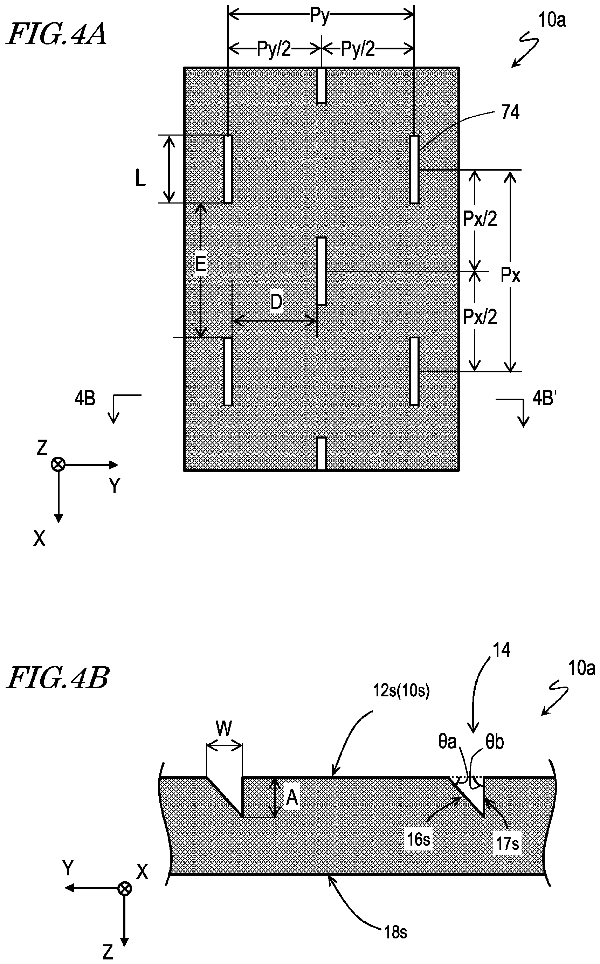

The first optical sheet **10** may be, for example, an optical sheet **10a** shown in FIG. **4A** and FIG. **4B****.** The optical sheet **10a** with a concavo-convex structure (a plurality of dents **14**) on its surface is sometimes referred to as textured film **10a.** The optical stack **100** including the textured film **10a** functions as the light distribution structure described in Patent Document 2 or Patent Document 3. For example, when a light source (e.g., LED device) is placed on a side surface of the second optical sheet **30** (e.g., left side in FIG. 1) and the second optical sheet **30** is utilized as a lightguide layer, light propagating in the -Y direction in the second optical sheet **30** undergoes total internal reflection by the plurality of internal spaces **14a** and is directed in the Z direction, which is perpendicular to the XY plane. Note that another lightguide layer may be further provided on the side of the fourth main surface **38s** of the second optical sheet **30,** or the first optical sheet **10** or the optical stack **100** may be used as a lightguide layer. Light guide plates having the optical stack **100** can be in a variety of forms. As described above, light guide bodies having the optical stack **100** can be used in a variety of illumination devices.

As shown in FIG. **4A****,** when the textured film **10a** is viewed from the normal direction of the first main surface **12s,** the plurality of dents **14** are provided in island shapes that are discrete with respect to both the **X** direction and the **Y** direction. In the textured film **10a,** the size (length **L,** width **W:** see FIG. **4A** and FIG. **4B**) of the dents **14** is such that the length **L** is preferably 10 µm or more and 500 µm or less, and the width **W** is preferably 1 µm or more and 100 µm or less, for example. Also, from the viewpoint of light extraction efficiency, the depth A is preferably 1 µm or more and 100 µm or less. The depth **A** of the dents **14** is preferably 20 µm or less, and more preferably 12 µm or less. The depth **A** of the dents **14** is preferably 4 µm or more, more preferably 6 µm or more, and more preferably 8 µm or more. In the case where the plurality of dents **14** are to be distributed discretely and uniformly, they may be disposed periodically as shown in FIG. **4A****,** for example. The pitch **Px** is, for example, 10 µm or more and 500 µm or less, and the pitch **Py** is, for example, 10 µm or more and 500 µm or less.

Regarding the density of the plurality of dents **14,** when the textured film **10a** is viewed from the normal direction of the main surface, a proportion (occupied area ratio) of the area of the plurality of dents **14** to the area of the textured film **10a** is preferably 0.3% or more from the viewpoint of obtaining a good luminance. The occupied area ratio of the plurality of dents **14** is to be selected as appropriate in accordance with the intended application; for example, in applications where transparency is needed, it is preferably 30% or less in order to obtain a good visible light transmittance and haze value, and preferably 1% or more from the viewpoint of obtaining a good luminance. The upper limit value is still more preferably 25% or less, and, for a high visible light transmittance, it is preferably 10% or less, and still more preferably 5% or less. For example, it is preferably 0.3% or more and 10% or less, and more preferably 0.5% or more and 4% or less. In applications where a higher luminance is required, it is preferably 30% or more and 80% or less. Note that the occupied area ratio of the plurality of dents **14** may be uniform, or the occupied area ratio may increase with increasing distance from the light source to ensure that luminance will not decrease with increasing distance from the light source.

An inclination angle **θa** of the first slope **16s** is, for example, 10° or more and 70° or less. The lower limit is preferably 30° or more, and more preferably 45° or more. When the inclination angle **θa** is smaller than 10°, the controllability of light distribution will decrease, and the light extraction efficiency may also decrease. On the other hand, when the inclination angle **θa** exceeds 70°, it may become difficult to process the textured film, for example. An inclination angle **θb** of the second slope **17s** is, for example, 50° or more and 100° or less. The lower limit is preferably 70° or more. When the inclination angle **θb** is smaller than 50°, stray light may occur in unintended directions. On the other hand, when the inclination angle **θb** exceeds 100°, it may become difficult to process the textured film, for example. The inclination angle **θa** of the first slope **16s** and the inclination angle **θb** of the second slope **17s** are angles relative to a direction that is parallel to the **Y** direction, in a cross-section of the dent **14** (a cross-section that is perpendicular to the **X** direction and that is parallel to the YZ plane). In this example, the inclination angle **θa** of the first slope **16s** is smaller than the inclination angle **θb** of the second slope **17s.** In illumination devices having the optical stack **100,** the first slope **16s** is disposed closer to a light source than is the second slope **17s.** The shape of a cross-section (a cross-section that is perpendicular to the X direction and that is parallel to the YZ plane) of the internal space **14a** is defined by the inclination angle **θa** of the first slope **16s** and the inclination angle **θb** of the second slope **17s,** the width **W,** and the depth **A.** Without being limited to what is illustrated, the shape of the internal space **14a** (dent **14**) may be modified in various ways. By adjusting the shape, size, density of placement, etc., of the internal spaces **14a** (dents **14**), distribution of rays (intensity distribution) emitted from the optical stack **100** can be adjusted (see, for example, Patent Documents 2 and 3).

An example has been illustrated where the dents **14** have a triangular cross-sectional shape. Without being limited to this example, however, the cross-sectional shape of the dents **14** may be a rectangle (e.g., a trapezoid) so long as it has a surface that can form an interface for directing light in the Z direction via total internal reflection, for example. Without being limited to a polygon, it may be a shape including a curve.

The optical stack **100** may further have another optical sheet. In the case where the textured film **10a** is formed using a curable resin, for example, the curable resin is applied onto a substrate layer (e.g., a transparent resin film such as PMMA film), a concavo-convex structure is formed on the curable resin layer, and by curing this, a textured film **10a** formed of a cured material can be obtained. At this time, the textured film **10a** is formed integrally on the substrate layer. In addition to this, the optical stack **100** may further have, for example, a lightguide layer, a light diffusion layer, an anti-reflection layer, a low-refractive index layer, a reflection layer, and a hard coat layer. The optical stack **100** may include an adhesive layer. The optical stack **100** can be produced by a roll-to-roll method, for example.

### EXAMPLES

Examples and Comparative Examples are illustrated below.

As the first optical sheet **10,** a textured film **10a** with a concavo-convex structure on its surface, described with reference to FIG. **4A** and FIG. **4B****,** was produced according to the method described in Japanese National Phase PCT Laid-Open Publication No. 2013-524288. Specifically, the surface of a polymethyl methacrylate (PMMA) film was coated with a lacquer (manufactured by Sanyo Chemical Industries, Ltd., FINECURE RM-64: an acrylate-based photocurable resin); an optical pattern was embossed on the film surface including the lacquer; and thereafter the lacquer was cured (ultraviolet ray irradiation conditions: D bulb, 1000 mJ/cm², 320 mW/cm²) to produce the textured film **10a** with the desired concavo-convex structure on the surface. The textured film **10a** had a thickness of 20 µm. The total thickness including the textured film **10a** and the PMMA film (substrate layer) was 60 µm, and the haze value was 3.2%. The textured film **10a** and the PMMA film (substrate layer) are collectively referred to as a resin film A.

In this textured film **10a,** a plurality of dents **14** having a length **L** of 80 µm, a width **W** of 17.3 µm, and a depth **A** of 10 µm and having a triangular cross-section are disposed at intervals with a width **E** (260 µm) along the X axis direction. Furthermore, patterns of such dents **14** are disposed at intervals with a width **D** (160 µm) along the **Y** axis direction. **Px** in FIG. **4A** is 340 µm, and **Py** is 174 µm. The dents **14** had a density of 2426/cm² on the concavo-convex textured film surface. The inclination angle **θa** in FIG. **4B** was about 60°, and the inclination angle **θb** was 85°. The occupied area ratio of the dents **14** was 3.4%.

As the second optical sheet **30,** a polymethyl methacrylate (PMMA) film (thickness 30 µm) was used. This PMMA film is referred to as a resin film B.

As the molecular adhesive **20,** a treatment liquid (solution) was used that was prepared by diluting 6-(3-triethoxysilylpropyl)amino-1,3,5-triazine-2,4-diazide (included in the general formula Ia) purchased from Sulfur Chemical Laboratory Inc. with ethanol to 0.5 mass%. Note that Sulfur Chemical Laboratory Inc. is the patentee of Japanese Patent No. 5083926.

An adhesive sheet for producing an optical stack of Comparative Example was produced as follows.

At first, an acrylic polymer was prepared. By using a four-necked flask equipped with stirring blades, a thermometer, a nitrogen gas inlet tube, and a condenser, 90.7 mass parts of n-butyl acrylate (BA), 6.3 mass parts of 4-acryloyl morpholine (ACMO), 2.7 mass parts of acrylic acid (AA), 0.3 mass parts of 4-hydroxybutyl acrylate (4HBA), and 0.1 mass parts of 2,2'-azobisisobutyronitrile as a polymerization initiator were placed in the flask together with ethyl acetate, so that the total of monomers was 50 mass%. After nitrogen replacement for 1 hour by introducing nitrogen gas with gentle stirring, the liquid temperature in the flask was kept at around 58°C and the polymerization reaction was carried out for 8 hours, whereby an acrylic polymer was obtained. After 2 hours had elapsed from the start of the polymerization reaction, ethyl acetate was added dropwise over 3 hours to bring the solid content to 35 mass%. In other words, the acrylic polymer was obtained as an acrylic polymer solution with a solid content of 35 mass%.

Then, in the resultant acrylic polymer solution, 0.15 mass parts of a trimer adduct of trimethylolpropane/tolylene diisocyanate (manufactured by Tosoh Corporation; product name Coronate L) and 0.075 mass parts of dibenzoyl peroxide (manufactured by Nippon Oil & Fats Co., Ltd.: NYPER BMT40(SV)) were added as cross-linking agents with respect to 100 mass parts of the polymer, thereby preparing an adhesive composition solution.

On one side of a polyethylene terephthalate (PET) film (product name: "MRF38", manufactured by Mitsubishi Chemical Corporation) having a thickness of 38 µm and having been silicone release-treated, the adhesive composition solution was applied to form an adhesive composition solution layer. The application was performed so that the adhesive composition solution layer had a thickness after drying (i.e., thickness of the adhesive composition layer) of 5 µm. By drying the adhesive composition solution layer at 150°C for 3 minutes, the solvent in the adhesive composition solution layer was removed, and the acrylic polymer was cross-linked by the cross-linking agent, whereby an adhesive composition layer was obtained. Next, the adhesive composition layer was pasted onto a release-treated surface of a polyethylene terephthalate (PET) film (product name: "MRE38", manufactured by Mitsubishi Chemical Corporation) having a thickness of 38 µm and having been silicone release-treated, thereby producing an adhesive sheet having a layered structure of PET film/adhesive composition layer/PET film.

### [Example 1]

The resin film A and the resin film B were joined using the molecular adhesive described above.

The treatment liquid containing the molecular adhesive was applied to the surface with dents of the textured film **10a** of the resin film A to a thickness of 16 µm. Thereafter, the surface was dried at 80°C for 1 minute and irradiated with ultraviolet ray from the side to which the molecular adhesive was applied. Due to the ultraviolet ray irradiation, the azide group of the molecular adhesive is converted to nitrene, and nitrene reacts with a hydrocarbon (e.g., alkyl group) on the surface of the resin film A to form covalent bonding. For the ultraviolet ray irradiation, a LED lamp (manufactured by Quark Technology Co., Ltd., peak illuminance: 200 mW/cm²) was used, and irradiation with ultraviolet ray was performed to achieve an integrated light intensity of 100 mJ/cm² (wavelength: 245 nm). The illuminance of ultraviolet ray was measured using UV Power Puck (manufactured by Fusion UV Systems Japan K.K.). The thickness of the molecular adhesive was about 40 nm. The film thickness was measured by ellipsometry on the surface of the acrylic film coated with the molecular adhesive. Measurements were performed at incident angles of 60°, 70°, and 80° using a light source in a measurement wavelength range of 210 nm to 1690 nm.

For the resin film B as well, in the same manner as for the resin film A, the molecular adhesive was applied to the surface of the resin film B to a thickness of about 40 nm, and allowed to react.

In a state where the respective surfaces of the resin film A and the resin film B to which the molecular adhesive were bonded faced each other, heating and pressurizing were performed for 5 minutes at 100°C and 0.5 MPa using a precision press machine. By this heating and pressurizing, silanol groups generated by hydrolysis of the alkoxysilyl groups of the molecular adhesive undergo a coupling reaction to form covalent bonding.

### [Example 2]

An optical stack was produced in the same manner as in Example 1 except that the temperature during heating and pressurizing was changed to 110°C.

### [Comparative Example 1]

One of the PET films having been release-treated was peeled off from the above adhesive sheet, and the exposed adhesive composition layer was pasted onto the resin film B (thickness: 20 µm), and then the other separator (PET film) was peeled off and the adhesive composition layer was pasted onto the concavo-convex surface of the textured film **10a** of the resin film A under a pressure of 0.05 MPa, thereby obtaining an optical stack having a layered structure of resin film B/adhesive composition layer/resin film A.

The optical stacks obtained were evaluated as follows. The results are shown in Table 1.

**[Table 1]**

| | Adhesion mechanism | Depth A of dents (µm) | Maximum penetration value B (µm) | B/A | Bending adhesiveness | Haze value (%) | Heating temperature (°C) | Pressurization pressure (MPa) | Time (min) |
|---|---|---|---|---|---|---|---|---|---|
| Example 1 | Molecular adhesive | 7.3 | 0.0 | 0.00 | ○ | 3.9 | 100 | 0.5 | 5 |
| Example 2 | Molecular adhesive | 7.3 | 0.8 | 0.11 | ○ | 3.8 | 110 | 0.5 | 5 |
| Comparative Example 1 | Adhesive | 7.4 | 2.7 | 0.36 | ○ | 3.3 | - | - | - |

### <Shape of internal space>

The depth A and the maximum penetration value B of the dents **14** were determined from a cross-sectional SEM image of the optical stack. For each optical stack, A and B were determined from cross-sectional images of multiple arbitrarily selected locations, and their averages were shown in Table 1.

The shape of the internal spaces in the optical stack of Example 1 was similar to the internal spaces **14a** shown in FIG. **1****,** with the second optical sheet **30** not penetrating into the dents **14** and maintaining the shape of the dents **14** as is. Meanwhile, the shape of the internal spaces in the optical stack of Example 2, which was pressurized at a higher temperature than the optical stack of Example 1, had the same shape as the internal space **14a** shown in FIG. **2****,** with the second optical sheet **30** slightly penetrating into the dent **14.** B/A was about 0.1, which was a sufficiently small value of 0.2 or less. The internal spaces in the optical stack of Comparative Example 1 had the same shape as the internal space **14Ca** shown in FIG. **3****.** The maximum penetration value **B** was **B1,** and B/A was about 0.4, which was a large value.

### <Bending adhesiveness>

For curved surface followability, the optical stacks were pasted onto a curved surface (30 mm wide × 80 mm long) of a cylindrical test piece of polymethyl methacrylate with an outer diameter of 90 mm, left for 5 days at room temperature, and evaluated for lifting and peeling. Also, lifting and peeling were evaluated after leaving the optical stacks in an environment of 23°C and 65% RH for 7 days and after leaving the optical stacks in an environment of 85°C and 85% RH for 1,000 hours. It was found that all of the optical stacks of Examples 1 and 2 and Comparative Example 1 had sufficient bending adhesiveness.

### <Haze value>

The haze value of each optical stack was measured by using a haze meter (machine name: "HZ-1", manufactured by Suga Testing Machinery Co.) with D65 light. The haze value of all of the optical stacks exhibited only a slight increase from the haze value of 3.2% of the above textured film.

### INDUSTRIAL APPLICABILITY

Optical stacks according to embodiments of the present invention can be broadly used in optical devices, such as display devices or illumination devices.

### REFERENCE SIGNS LIST

- **10, 10a**: first optical sheet
- **12s**: first main surface
- **18s**: second main surface
- **20**: molecular adhesive (adhesive molecule)
- **30**: second optical sheet
- **32s**: third main surface
- **38s**: fourth main surface
- **100, 200**: optical stack

## Claims

1. An optical stack comprising:
a first optical sheet having a first main surface with a concavo-convex structure and a second main surface on an opposite side from the first main surface; and
a second optical sheet having a third main surface that is disposed on a side of the first main surface of the first optical sheet, wherein,
the concavo-convex structure of the first main surface includes a plurality of dents and flat portions between two dents that are adjacent to each other of the plurality of dents, and
the flat portions of the first main surface and the third main surface are bonded by covalent bonding via a molecular adhesive.

2. The optical stack of claim 1, wherein for each of the plurality of dents, when a distance from an opening face defined by an opening of the dent to a deepest portion of the dent is defined as A and a point at which a distance from the opening face to the third main surface of the second optical sheet that has penetrated into the dent takes a maximum value B is defined as a point of maximum penetration, B/A is 0.2 or less.

3. The optical stack of claim 2, wherein the point of maximum penetration is positioned on a side of the deepest portion compared to a side surface of the dent.

4. The optical stack of any one of claims 1 to 3, wherein a distance between the flat portions and the third main surface does not exceed 500 nm.

5. An optical stack comprising:
a first optical sheet having a first main surface with a concavo-convex structure and a second main surface on an opposite side from the first main surface; and
a second optical sheet having a third main surface that is disposed on a side of the first main surface of the first optical sheet, wherein,
the concavo-convex structure of the first main surface includes a plurality of dents and flat portions between two dents that are adjacent to each other of the plurality of dents,
for each of the plurality of dents, when a distance from an opening face defined by an opening of the dent to a deepest portion of the dent is defined as A and a point at which a distance from the opening face to the third main surface of the second optical sheet that has penetrated into the dent takes a maximum value B is defined as a point of maximum penetration, B/A is 0.2 or less, and
a distance between the flat portions and the third main surface does not exceed 500 nm.

6. The optical stack of claim 5, wherein the flat portions of the first main surface and the third main surface are bonded by covalent bonding via a molecular adhesive.

7. The optical stack of any one of claims 1 to 4 and 6, wherein the molecular adhesive has at least one reactive group selected from the group consisting of an azide group, an amino group, a mercapto group, an isocyanate group, a ureido group, an epoxy group, a silanol group, and an alkoxysilyl group.

8. The optical stack of any one of claims 1 to 4 and 6, wherein the molecular adhesive has an azide group, and a silanol group or an alkoxysilyl group.

9. The optical stack of claim 8, wherein the molecular adhesive further has a triazine ring, and the azide group is bonded to the triazine ring.

10. The optical stack of claim 9, wherein the flat portions and the third main surface have at least one reactive group selected from the group consisting of a hydrocarbon group, a carbonyl group, and a hydroxyl group, and form covalent bonding with the molecular adhesive.

11. The optical stack of any one of claims 1 to 10, wherein the first optical sheet is formed of a cured material of a curable resin.

12. The optical stack of any one of claims 1 to 11, having a haze value of 5.0% or less.

13. An optical device comprising a light guide plate having the optical stack of any one of claims 1 to 12.

14. A method for producing the optical stack of any one of claims 1 to 12, the method comprising:
step A of applying a molecular adhesive represented by the following general formula [I] to at least one of the flat portions of the first optical sheet and the third main surface of the second optical sheet;
step B of irradiating the molecular adhesive with light after the step A; and
step C of pressurizing and heating the flat portions and the third main surface in a state where the flat portions and the third main surface face each other: 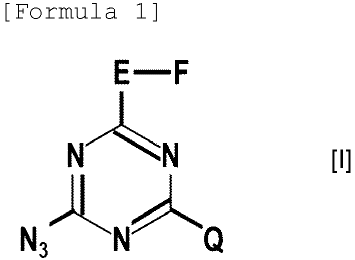
wherein E is any group; F is an OH group or an OH-generating group; -Q is -N₃ or -NR₁(R₂); R₁ and R₂ in -NR₁(R₂) are each H, a hydrocarbon group having 1 to 24 carbon atoms, or -RSi(R')n(OA)3-n, where R is a chain hydrocarbon group having 1 to 12 carbon atoms, R' is a chain hydrocarbon group having 1 to 4 carbon atoms, A is H or a chain hydrocarbon group having 1 to 4 carbon atoms, and n is an integer of 0 to 2; and R₁ and R₂ are the same as or different from each other.

15. The production method of claim 14, wherein in the step C, heating is performed to a temperature of 60°C or higher and 150°C or lower.

16. The production method of claim 14, wherein in the step C, heating is performed to a temperature of 80°C or higher and 110°C or lower.
